# EUROPEAN PATENT APPLICATION

(11) **EP 1 119 156 A1**
(43) Date of publication of application: **25.07.2001**
(21) Application number: 00949913.8
(22) Date of filing: 26.07.2000
(51) Int. Cl.: H04M 1/02, H04B 1/38

(54) **FOLDABLE PORTABLE COMMUNICATION TERMINAL DEVICE**

(30) Priority: 29.07.1999 JP 21552199; 29.07.1999 JP 21552299
(71) Applicant: Matsushita Electric Industrial Co., Ltd., Kadoma-shi, Osaka 571-0050 (JP)
(72) Inventor: HAYASHI, Takahiro, Yokohama-shi, Kanagawa 227-0045 (JP); KUBO, Tetuya, Yokohama-shi, Kanagawa 222-0011 (JP)
(74) Representative: Grünecker, Kinkeldey, Stockmair & Schwanhäusser Anwaltssozietät
(86) International application number: JP0004995
(87) International publication number: WO0110099

(57) **Abstract**

The components such as a control section (microcomputer) (not shown) , a display (liquid crystal display) (14), and RF communication section (not shown) of which the function blocks are mounted on the hard substrate (27) are arranged and accommodated within the upper case (11), and the key operation section (18) of which the function blocks are mounted on the key board (flexible board (28)), and a battery (29) are arranged and accommodated in the lower case (12). Consequently, an antenna (13) is disposed on the upper case (11) having the RF communication section (not shown), and the key operation section (18) and the battery (29) are arranged and accommodated within the lower case (12), so that a slim profile as well as lightweight and downsizing are realized by bringing the function blocks to be arranged and accommodated in the upper case and the lower case closer by function in contrast to the example of the related art.

## Description

### Technical Field

The present invention relates to a mobile communication terminal constructed in such a manner that the upper case and the lower case can be folded one on another by means of a hinge, and more specifically, to a mobile communication terminal wherein the number of wiring between the upper case and the lower case is reduced and the components are arranged so as to reduce the thickness of the lower case and the lower case.

### Background Art

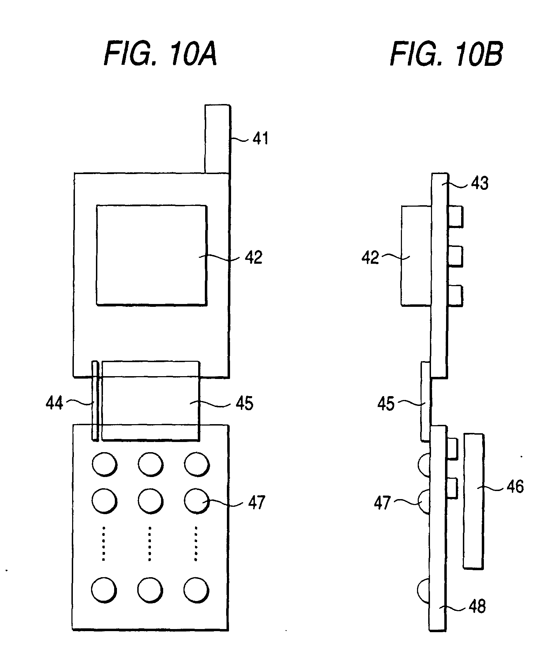

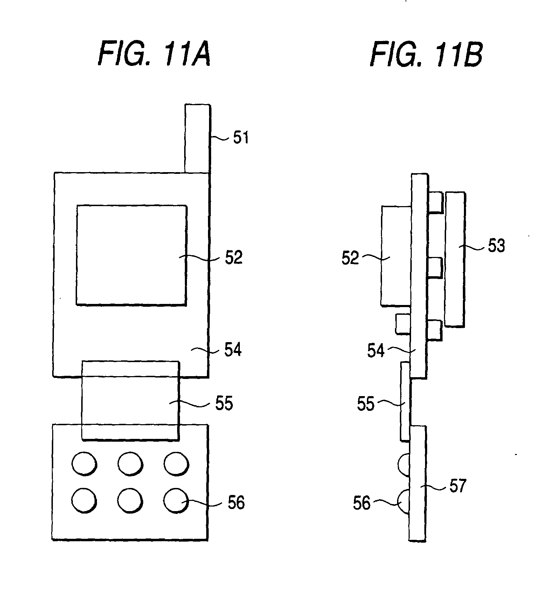

In general, a mobile communication terminal that can be folded by means of a hinge as in Fig. 10 and Fig. 11 is known.

Fig. 10 shows the first example of the related art, wherein Fig. 10A is a plan view showing the opened state with the case portions removed, the upper portion of the figure illustrates the upper case side and the lower portion illustrates the lower case side, and Fig. 10B is a side view with the case portions removed.

The upper case side in Fig. 10 is constructed in such a manner that an antenna 41 and a liquid crystal display 42 are provided, and a control function block and a function block corresponding to the display is mounted on the logical printed board 43. The lower case side in Fig. 10 is provided with a switch 47 for key-in operation, a function block corresponding to the switch, a RX printed board 48 for mounting a function block for controlling the radio communication (RX), and abattery 46. In order to connect the upper and lower function blocks, a coaxial cable 44 and a flexible connector 45 are provided.

Fig. 11 is the second example of the related art, wherein Fig. 11A is a plan view showing the opened state with the case portions removed, and on the lower portion, switches for key-in operation 56 that enable a key-in operation of the key board arranged on the upper portion in the closed state are arranged on the key board 57.

While the lower portion in Fig. 11 constitutes a flip portion with switches for key-in operation 56 disposed on the key board 57, the upper portion in Fig. 11 is constructed in such a manner that an antenna 51, a liquid crystal display 52, and a battery 53 are provided, and the main printed board 54 is mounted with function blocks corresponding thereto and a function block for controlling the radiocommunication (RX) and the logical control. A flexible connector 55 for electrically connecting the upper portion and the lower portion is also provided.

In the mobile communication terminal, there has been a requirement that a slim profile as well as lightweight and downsizing are realized because the weight, size and thickness of the equipment as a whole are evaluated as an important indicator of the mobilability.

However, in the first example of the related art, the conventional hard printed board is used for each of the upper case and the lower case, and a coaxial cable of conventional type is used as a cable for connecting the upper and lower cases . Therefore, the weight and the thickness of the equipment as a whole, being apart from downsizing, are still remaining as a subject to be solved.

In the second example of the related art, since it has only a flip construction and the upper and lower cases cannot be folded one on another, there has been such problem as regards the weight balance that it is heavier on the upper portion, thereby lacking in weight balance.

Accordingly, it is an object of the present invention to provide a foldable mobile communication terminal in which the number of wiring between the upper case and the lower case is reduced, and the components are arranged so as to reduce the thickness of the upper case and the lower case.

### Disclosure of the Invention

According to the first aspect of the present invention, the control section, the display, the RF communication section, the I/O section and the vibrator section of which the function block is mounted on the hard board are arranged and accommodated in the upper case, and the operation section and the battery of which the function block is mounted on the key board are arranged and accommodated in the lower case, whereby the compact and the slim profile is realized by reducing the number of wiring for connecting the upper and lower cases by arranging these functions together in the function blocks to be accommodated in the upper and lower cases, and by mounting only the components corresponding to the key-in operation and the battery on the board in the lower case.

According to the second aspect of the present invention, the display arranged and accommodated in the upper case comprises a liquid crystal display, and a menu selecting section for selecting a menu by navigating through the menu system displayed on the display is disposed in the vicinity of lower side of the display, whereby the operability is improved by arranging the menu selecting section in the vicinity of the display.

According to the third aspect of the present invention, the key board arranged and accommodated in the lower case is a flexible board, and the flexible board is shared its use with the connecting board for connecting the upper case and the lower case, whereby the usage of the flexible board contributes to achieve further compact and slim profile.

According to the fourth aspect of the present invention, the battery terminal, the microphone, the key diaphragm, and the LED for keys are all mounted on the same surface of the flexible board and folded or turned down before storing in the lowercase, where by packaging of those components on the flexible board can be facilitated and further compact and slim profile is realized by putting some thought into the storage in the lower case

According to the fifth aspect of the invention, the microphone is mounted in an inclined state on the lower side of the lower case at the position close to the mouth so as to receive the sound from the speaker directly while in use, whereby the sound collecting property of the microphone is improved and the space to which the microphone is mounted is secured while saving the space.

According to the sixth aspect of the invention, a view port is provided on the lower case so that the contents displayed on the display can be seen in the folded state, whereby the displayed content can be seen in the folded state.

According to the seventh aspect of the invention, the view port is disposed between the microphone and the operation section, whereby the displayed contents can be seen conveniently in the closed state.

According to the eighth aspect of the invention, the view port is provided with a transparent plate, whereby the displayed contents can be seen while preventing the dust from entering therein.

According to the ninth aspect of the invention, the transparent plate is given a lens function, whereby the displayed contents can be enlarged.

According to the tenth aspect of the invention, the portion of the upper case and the lower case in the vicinity of the portion being mechanically connected with respect to each other is formed in a narrower configuration than the remaining portion, whereby the gripping property in the opened state is enhanced and the total weight is reduced.

According to the eleventh aspect of the invention, the control section, the display, and the RF communication section of which the function blocks are mounted on the hard board are arranged and accommodated in the upper case, and the operation section, the I/O connector, the vibrator of which the function blocks are mounted on the key board and the battery are arranged and accommodated in the lower case, whereby the number of wiring is reduced by bringing the function blocks to be arranged in the upper and lower cases respectively closer by function, and only the components corresponding to the control section, the display, and the RF communication section are mounted on the hard board in the upper case, thereby realizing further compact and slim profile of the upper case.

According to the twelfth aspect of the invention, the flexible board is used as the keyboard arranged and accommodated in the lower case, and the flexible board is shared its use with the connecting board connecting the upper case and the lower case, whereby further compact and slim profile is realized by employment of the flexible board.

According to the thirteenth aspect of the invention, the battery terminal, the vibrator, the microphone, the buzzer, the key diaphragm, and the LED for keys are all mounted on the same surface of the flexible board and folded or turned down before storing in the lower case, whereby further compact and slimprofile is realized by putting some thought into the storage in the lower case.

According to the fourteenth aspect of the invention, the portion of the upper case and the lower case near the portion being mechanically connected with respect to each other formed in a narrower configuration than the remaining portion, whereby the gripping property in opened state is enhanced and the total weight is reduced.

### Brief Description of the Drawings

Fig. 1 is a perspective view of a foldable mobile communication terminal in the opened state according to the first embodiment of the present invention.

Fig. 2 is a rear perspective view of a foldable mobile communication terminal in the opened state according to the first embodiment of the present invention.

Fig. 3 is a side view of a foldable mobile communication terminal in the opened state according to the first embodiment of the present invention.

Fig. 4 is a side cross sectional view of a foldable mobile communication terminal in the closed state according tot he first embodiment of the present invention.

Fig. 5 is a cross sectional plan view showing an electrical connection between the upper case and the lower case and a general construction of a flexible board on which the function block for the components to be arranged in the lower case.

Fig. 6 is a perspective view of a foldable mobile communication terminal in the opened state according to the second embodiment of the present invention.

Fig. 7 is a rear perspective view of the foldable mobile communication terminal in the opened state according to the second embodiment of the present invention.

Fig. 8 is a sectional side elevation of the foldablemobile communication terminal in the closed state according to the second embodiment of the present invention.

Fig. 9 is a plan sectional view showing an electric connection between the upper case and the lower case, and a general construction of the flexible board on which a functional block for the components to be arranged in the lower case.

Fig. 10 is a block diagram showing the interior of the mobile communication terminal that can be folded by means of a hinge according to the first example of the related art.

Fig. 11 is a block diagram showing the interior of the mobile communication terminal that can be folded by means of a hinge according to the second example of the related art.

### Embodiments of the Invention

### (First Embodiment)

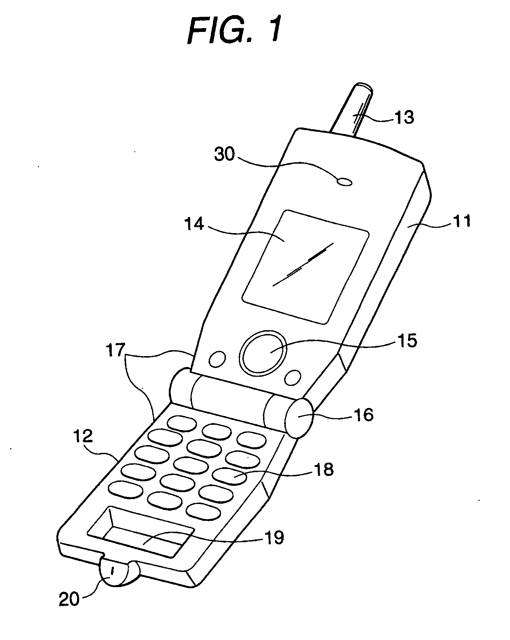

Referring now to Fig. 1 to Fig. 5, the first embodiment of the present invention will be illustrated.

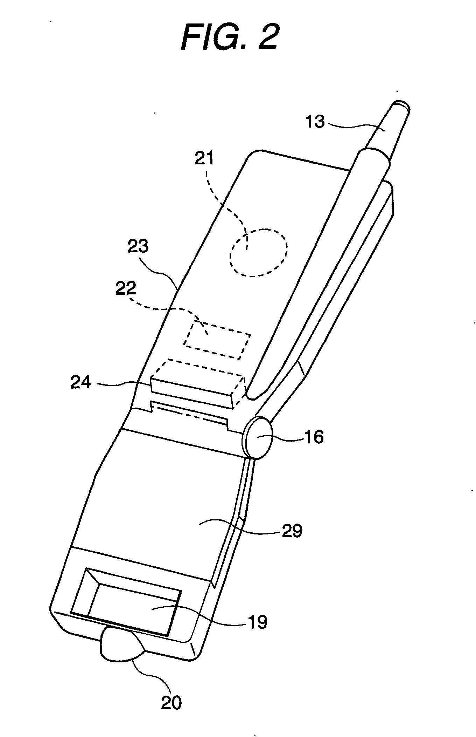

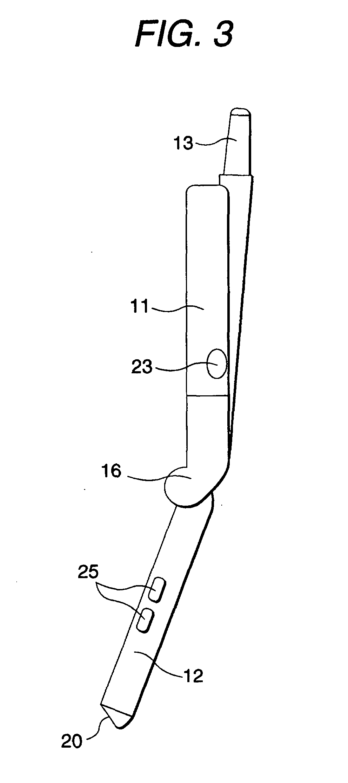

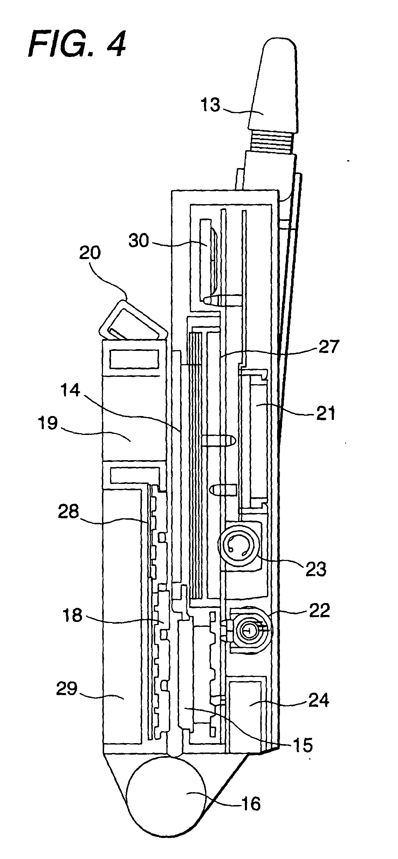

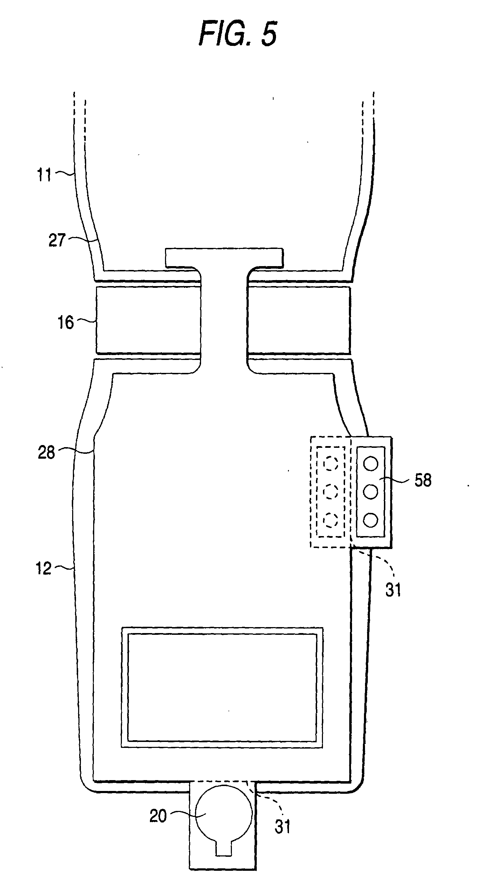

Fig. 1 is a perspective view of the foldable mobile communication terminal in the opened state according to the first embodiment of the present invention; Fig. 2 is a rear perspective view of the foldable mobile communication terminal in the opened state according to the first embodiment of the present invention; Fig. 3 is a side view of the foldable mobile communication terminal in the opened state according to the first embodiment of the present invention; Fig. 4 is a side cross sectional view of the foldable mobile communication terminal in the closed state according to the first embodiment of the present invention; and Fig. 5 is a cross sectional plan view showing an electrical connection between the upper case and the lower case and a general construction of a flexible board on which the function block for the components to be arranged in the lower case.

The foldable mobile communication terminal of the present invention may, as shown in Figs. 1 to 5, be folded by means of a hinge portion 16 between the upper case 11 and the lower case 12. In the foldable mobile communication terminal of the present invention, function blocks are arranged and accommodated in the upper case 11 and the lower case 12 while bringing them closer by function.

In other words, the control section (microcomputer) (not shown), the display (liquid crystal display) 14, the RF communication section (not shown), the buzzer 21, the vibrator 22, the speaker 30, and the I/O connector 24 of which the function blocks are mounted on the hard board 27 are arranged and accommodated in the upper case 11, and the key operation section 18 of which the function block is mounted on the key board (flexible board 28) and the battery 29 are arranged and accommodated in the lower case 12.

Consequently, an antenna 13 is arranged on the upper case 11 which includes the RF communicating section (not shown), and the key operation section 18 and the battery 29 are arranged and accommodated in the lower case 12, so that it is not necessary any more to construct in such a manner that the antenna 41 is arranged on the upper case, a connecting passage for supplying a power or for transmitting signals to the antenna 41 is provided through the logical printed board 43 and the coaxial cable 44, and the function blocks for the battery 46 and the RF communicating section are mounted on the RX printed board 48, which is a hard board, in the lower case, as is in the first example of the related art shown in Fig. 10. In addition, balanced arrangement of the components in the upper and lower cases reduces the power required of the vibrator and the length of the electrical wiring of the I/O connector in comparison with the case where majority of components are arranged in the upper case as shown in the second example of the related art, thereby realizing further compact and slim profile.

The foldable mobile communication terminal of the present invention is provided with a menu selecting section 15 for selecting a suitable menu by navigating through the menu system while viewing contents displayed in the display 14, for example, a menu screen in the vicinity of the lower side of the display 14. In this arrangement, operability in navigative selection can be improved. In relation to the menu selecting section 15, it is also possible to provide a operating keys such as a mode key, a telephone number list key, and a menu key on both sides of the menu selecting section 15, though they are not specified in the figure.

The foldable mobile communication terminal according to the present invention uses a key board arranged and accommodated in the lower case 12 as a flexible board 28, as shown in Fig. 5. The flexible board 28 is shared its use with the connecting board for connecting the upper case 11 and the lower case 12. In this way, according to the present invention, since the flexible board 28 is employed and thus the RX printed board 48, which is a hard board, is not employed in the lower case as in the first example of the related art shown in Fig. 10, further compact and slim profile is realized.

In the flexible board 28 of the present invention, components such as the battery terminal 58, the microphone 20, the key diaphragm, and the LED for key display to be arranged and accommodated in the lower case is mounted on the same surface of the flexible board 28 and folded or turned down before storing in the lower case. In other words, some components to be mounted are folded along the folding portion 31 before storing in the lower case as shown in Fig. 5, so as to facilitate packaging of those components on the flexible board 28 and to realize further compact and slim profile by putting some thought into the storage in the lower case.

In addition, the foldable mobile communication terminal of the present invention is provided with a narrowed portion 17 on the upper case 11 and the lower case 12 near the hinge portion 16. In this arrangement, the user can hold near the narrowed portion 17 when he or she opens and uses the mobile communication terminal, the narrowed portion enhances the gripping property, and in addition, reduces the total weight of the terminal since the narrowed portion 17 is formed and thus the portion of the case member corresponding to the narrowed portion 17 is eliminated.

According to the foldable mobile communication terminal of the present invention, since a view port 19 is provided, the contents of the display 14 can be seen in the closed state as shown in Fig. 4. The view port 19 can be formed in a through port or provided with a transparent plate. In this case, when the transparent plate is formedby a lens, the displayed contents can be enlarged and the transparent plate can prevent dust from entering inside in the closed state.

According to the foldable mobile communication terminal, a microphone 20 is mounted in an inclined state on the lower side of the lower case 12. In other words, as shown in Fig. 3, the microphone 20 is mounted in an inclined state on the lower side of the lower case 12, it comes to the closest position to the mouth of the speaker when it is opened (in use), thereby receiving the sound from the speaker directly. Though the microphone 20 and the speaker 30 are, in the closed state, brought closer forming a prescribed angle as shown in Fig. 4, there is no possibility of the occurrence of howling and of the interruption of a ringing signal, if it rings, coming out from the speaker 30 since the microphone 20 is constructed so as not to be energized in the closed state.

Since the HSJ (head set jack) 23 or the side surface operating key 25 are also shown in Fig. 2, Fig. 3 and Fig. 4 in relation to the present invention, they are not recognized to be a part of this invention, and thus the description is not given here.

### (Second Embodiment)

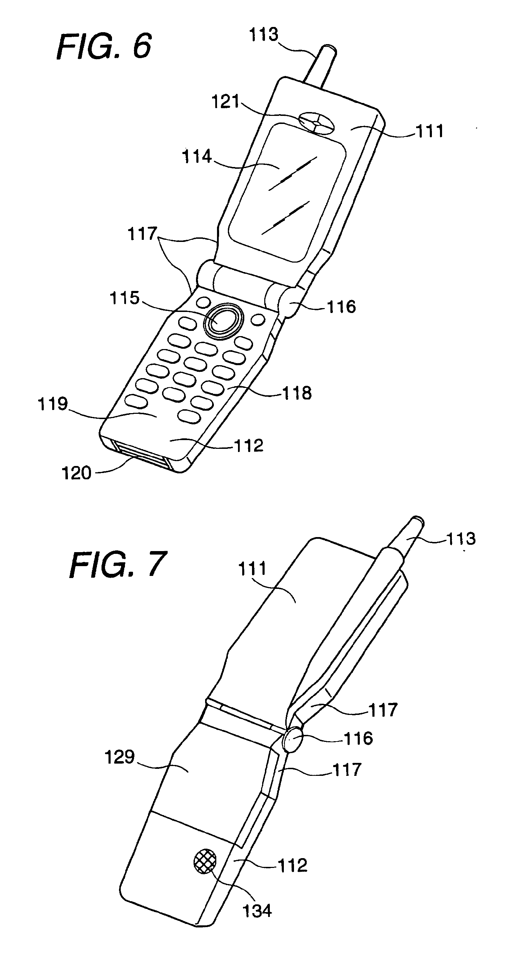

Referring now to Fig. 6 to Fig. 9, the second embodiment of the present invention will be illustrated.

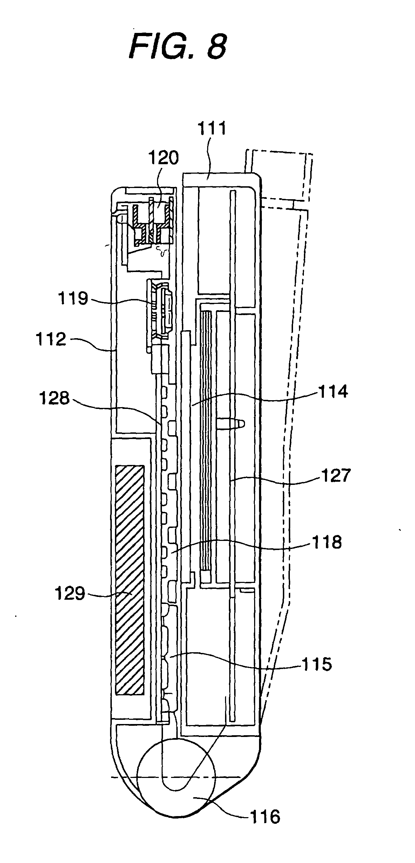

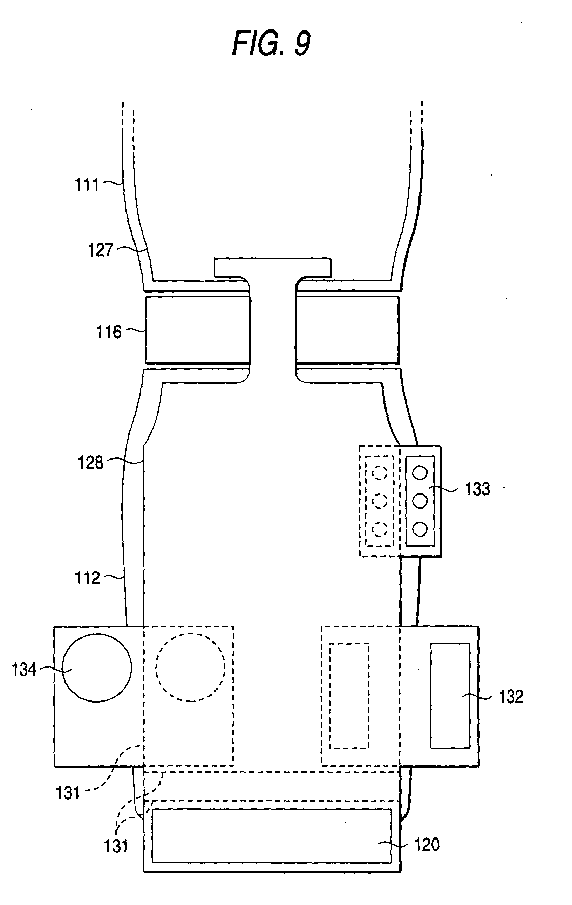

Fig. 6 is a perspective view of a foldable mobile communication terminal in the opened state according to the second embodiment of the present invention; Fig. 7 is a rear perspective view of the foldable mobile communication terminal in the opened state according to the second embodiment of the present invention; Fig. 8 is a sectional side elevation of the foldable mobile communication terminal in the closed state according to the second embodiment of the present invention; and Fig. 9 is a plan sectional view showing an electric connection between the upper case and the lower case, and a general construction of the flexible board on which a functional block for the components to be arranged in the lower case.

The foldable mobile communication terminal of the present invention can be folded by means of the hinge portion 116 between the upper case 111 and the lower case 112 as shown in Fig. 6 to Fig. 9. In the foldable mobile communication terminal of the present invention, the function blocks are arranged and accommodated in the upper case 111 and the lower case 112 while bringing the function blocks closer by function.

In other words, the components such as the control section (microcomputer)(not shown), the display (liquid crystal display) 114, and the RF communication section (not shown) of which the function blocks are mounted on the hard board 127 are arranged and accommodated within the upper case 111, and the key operation section 118, the I/O connector section 120, the vibrator 132 of which the function blocks are mounted on the key board (flexible board 128) and a battery 129 are arranged and accommodated in the lower case 112.

Consequently, an antenna 113 is disposed on the upper case 111 having the RF communication section (not shown), and the key operation section 118 and the I/O connector section 120, a vibrator 132 and the battery 129 are arranged and accommodated within the lower case 112, so that it is not necessary anymore to construct in such a manner that the antenna 141 is arranged on the upper case, a connecting passage for supplying a power or for transmitting signals to the antenna 141 is provided through the logical printed board 143 and the coaxial cable 144, and the function blocks for the battery 146 and the RF communicating section are mounted on the RX printed board 148, which is a hard board, in the lower case, as is in the first example of the related art shown in Fig. 10.

Since the vibrator 132 and the I/O connector section 120 are arranged and accommodated in the lower case 112, the weight balance is improved in comparison with the case where the vibrator (not shown) and the I/O connector (not shown) are all arranged in the upper case as seen in the second example of the related art, whereby the power required of the vibrator is reduced and the compact and slim profile is realized.

The foldable mobile communication terminal according to the second embodiment of the present invention, as shown in Fig. 9, the flexible board 128 is used as the keyboard arranged and accommodated in the lower case 112, and the flexible board 128 is shared its use with the connecting board connecting the upper case 111 and the lower case 112. In this way, since the flexible board 128 is employed in this invention, and thus the RX printed board 148, which is a hard board, is not mounted in the lower case as in the first example of the related art shown in Fig. 10, further compact and slim profile can be realized.

In the flexible board 128 of the present invention, the components such as the buzzer 134, the battery terminal 133, the vibrator 132, the microphone 119, the key diaphragm, and the LED for key display (not shown) to be arranged and accommodated in the lower case are all mounted on the same surface of the flexible board 128 and folded or turned down before storing in the lower case. In other words, as shown in Fig. 9, some components to be mounted are folded along the folding portion 131 before storing in the lower case, so as to facilitate packaging of those components on the flexible board 128 and realize further compact and slim profile by putting some thought into the storage in the lower case.

In addition, the foldable mobile communication terminal of the present invention is provided with a narrowed portion 117 on the upper case 111 and the lower case 112 near the hinge portion 116. In this arrangement, the user can hold near the narrowed portion 117 when he or she opens and uses the mobile communication terminal, the narrowed portion enhances the gripping property, and in addition, reduces the total weight of the terminal since the narrowed portion 117 is formed and thus the portion of the case member corresponding to the narrowed portion 117 is eliminated.

Though the menu selecting section 115 is provided on the upper portion of the lower case 112 in the example shown in Fig. 6, it is also possible to provide it in the vicinity of the lower portion of the display 114 on the upper case 111. In this arrangement, since it is located immediately near the display 114, operability in navigative selection can be improved.

### Industrial Applicability

As will be understood by the description above, according to the present invention, the control portion, the display, the RF communication section, the I/O section and the vibrator section of which the function blocks are mounted on the hard board are arranged and accommodated in the upper case, the operation section and the battery storage for storing a battery of which the function block is mounted on the key board and accommodated in the lower case, and thus there is an advantage in that the compact and slim profile is realized by reducing the number of wiring for connecting the upper and lower cases by arranging these functions together in the function blocks to be accommodated in the upper and lower cases, and by mounting only the components corresponding to the key-in operation and the battery on the board in the lower case.

According to the present invention, the display arranged and accommodated in the upper case comprises a liquid crystal display, and a menu selecting section for selecting a menu by navigating through the menu system displayed on the display is disposed in the vicinity of lower side of the display, whereby there is an advantage in that the operability is improved by arranging the menu selecting section in the vicinity of the display.

According to the present invention, the keyboard arranged and accommodated in the lower case is a flexible board, and the flexible board is shared its use with the connecting board for connecting the upper case and the lower case, whereby there is an advantage in that the usage of the flexible board contributes to achieve further compact and slim profile.

According to the present invention, a battery terminal, a microphone, a key diaphragm, and a LED for keys are all mounted on the same surface of the flexible board and folded or turned down before storing in the lower case, whereby there is an advantage in that packaging of those components on the flexible board can be facilitated and further compact and slim profile is realized by putting some thought into the storage in the lower case.

According to the present invention, the microphone is mounted in an inclined state on the lower side of the lower case at the position close to the mouth so as to receive the sound from the speaker directly while in use, whereby there is an advantage in that the sound collecting property of the microphone is improved and the space to which the microphone is mounted is secured while saving the space.

According to the present invention, a viewport is disposed on the lower case so that the contents displayed on the display can be seen in the folded state, whereby there is an advantage in that the displayed contents can be seen in the folded state.

According to the present invention, the view port is disposed between the microphone and the operation section, whereby there is an advantage in that the displayed contents can be seen conveniently in the closed state.

According to the present invention, a transparent plate is mounted on the view port, whereby there is an advantage in that the displayed contents can be seen while preventing the dust from entering therein.

According to the present invention, the transparent plate is given a lens function, whereby there is an advantage in that the displayed contents can be enlarged.

According to the present invention, the portion of the upper case and the lower case in the vicinity of the portion being mechanically connected with respect to each other is formed in a narrower configuration than the remaining portion, whereby there is an advantage in that the gripping property in the opened state is enhanced and the total weight is reduced.

According to the present invention, the control section, the display, and the RF communication section of which the function blocks are mounted on the hard board are arranged and accommodated in the upper case, and the operation section, the I/O connector, the vibrator and the battery of which the function blocks are mounted on the key board are arranged and accommodated in the lower case, whereby there is an advantage in that the number of wiring is reduced by bringing the function blocks to be arranged in the upper and lower cases respectively closer by function, and only the components corresponding to the control section, the display, and the RF communication section are mounted on the hard board in the upper case, thereby realizing further compact and slim profile of the upper case.

According to the present invention, the flexible board is used as the key board arranged and accommodated in the lower case, and the flexible board is shared its use with the connecting board connecting the upper case and the lower case, whereby there is an advantage in that further compact and slim profile is realized by employment of the flexible board.

According to the present invention, the battery terminal, the vibrator, the microphone, the buzzer, the key diaphragm, and the LED for keys are all mounted on the same surface of the flexible board and folded or turned down before storing in the lower case, whereby there is an advantage in that further compact and slim profile is realized by putting some thought into the storage in the lower case.

According to the present invention, the portion of the upper case and the lower case near the portion being mechanically connected with respect to each other formed in a narrower configuration than the remaining portion, whereby there is an advantage in that the gripping property in opened state is enhanced and the total weight is reduced.

## Claims

1. A foldable mobile communication terminal comprising:
an upper case including a control section, a display, a RF communication section, an I/O section and a vibrator section of which a function block is mounted on a hard board are arranged; and
a lower case including a operation section and a battery of which a function block is mounted on the key board.

2. A foldable mobile communication terminal according to claim 1,
wherein the display arranged and accommodated in the upper case comprises a liquid crystal display,
wherein a menu selecting section for selecting a menu by navigating through the menu system displayed on the display is disposed in the vicinity of lower side of the display.

3. A foldable mobile communication terminal according to claim 1,
wherein the key board arranged and accommodated in the lower case is a flexible board,
wherein said the flexible board is shared its use with the connecting board for connecting the upper case and the lower case.

4. A foldable mobile communication terminal according to claim 1, wherein a battery terminal, a microphone, a key diaphragm, and a LED for keys are all mounted on the same surface of the flexible board and folded or turned down before storing in the lower case.

5. A foldable mobile communication terminal according to claim 1, wherein the microphone is mounted in an inclined state on the lower side of the lower case at the position close to the mouth so as to receive the sound from the speaker directly while in use.

6. A foldable mobile communication terminal according to claim 1, wherein a view port is provided on the lower case whereby the displayed contents on the display can be seen in the folded state.

7. A foldable mobile communication terminal according to claim 6, wherein the view port is disposed between the microphone and the operation section.

8. A foldable mobile communication terminal according to claim 6 or claim 7, wherein a transparent plate is mounted on the view port.

9. A foldable mobile communication terminal according to claim 8, wherein the transparent plate is given a lens function.

10. A foldable mobile communication terminal according to claim 1, wherein the portion of the upper case and the lower case in the vicinity of the portion being mechanically connected with respect to each other is formed in a narrower configuration than the remaining portion.

11. A foldable mobile communication terminal comprising:
an upper case including a control section, a display, and the RF communication section of which the function blocks are mounted on the hard board ; and
a lower case including a operation section, the I/O connector, the vibrator and the battery of which the function blocks are mounted on the key board.

12. A foldable mobile communication terminal according to claim 11,
wherein the flexible board is used as the key board arranged and accommodated in the lower case,
wherein the flexible board is shared its use with the connecting board connecting the upper case and the lower case.

13. A foldable mobile communication terminal according to claim 11, wherein the components such as the battery terminal, the vibrator, the microphone, the buzzer, the key diaphragm, and the LED for keys are all mounted on the same surface of the flexible board and folded or turned down before storing in the lower case.

14. A foldable mobile communication terminal according to claim 11, wherein the portion of the upper case and the lower case near the portion being mechanically connected with respect to each other formed in a narrower configuration than the remaining portion.
